# EUROPEAN PATENT APPLICATION

(11) **EP 2 221 997 A1**
(43) Date of publication of application: **25.08.2010**
(21) Application number: 09161646.6
(22) Date of filing: 02.06.2009
(51) Int. Cl.: H04B 10/08, H04B 10/155, H04B 10/20

(54) **Optical network unit and abnormal detecting and power monitoring method thereof**

(30) Priority: 20.02.2009 TW 98105376
(71) Applicant: Delta Electronics, Inc., Taoyuan Hsien 333 (TW)
(72) Inventor: Weng Chia-Kai, 333, Taoyuan Hsien (TW); Wu, Ming-Chia, 333, Taoyuan Hsien (TW); Tai, James, 333, Taoyuan Hsien (TW)
(74) Representative: 2K Patentanwälte Blasberg Kewitz & Reichel

(57) **Abstract**

There is disclosed an optical network unit (20) including an optical transmitter (211), an optical detector (212) and a signal measurement module (23). The optical transmitter transmits an optical signal to an optical line terminal of a passive optical network system. The optical detector is utilized for monitoring the emission of the optical signal and transforming the received optical signal into a current signal which then is transformed into a voltage signal. The signal measurement module (23) is connected to the optical detector (212) for filtering and sampling the voltage signal and generating a sampling signal. The average output power of the optical transmitter (211) can be obtained by averaging the voltage values of the sampling signal. Once the up-transmission data packet of the optical network unit exceeds the time interval of the allocated time slot, and the voltage values of the sampling signal have several points over a threshold, the optical transmitter is turned off. Furthermore, an abnormal detecting and power monitoring method of the optical network unit is also disclosed.

## Description

### CROSS REFERENCE TO RELATED APPLICATIONS

This Non-provisional application claims priority under Art 87 EPC on Patent Application No. 098105376 filed in Taiwan, Republic of China on February 20, 2009, the entire contents of which are hereby incorporated by reference.

### BACKGROUND OF THE INVENTION

### FIELD OF INVENTION

The present invention relates to an optical network unit in a passive optical network system and its abnormal detecting and power monitoring method, wherein the optical network unit is able to detect if the up-transmission data packet exceeds its allocated time slot, and to calculate the average output power of the transmitted optical signal.

### RELATED ART

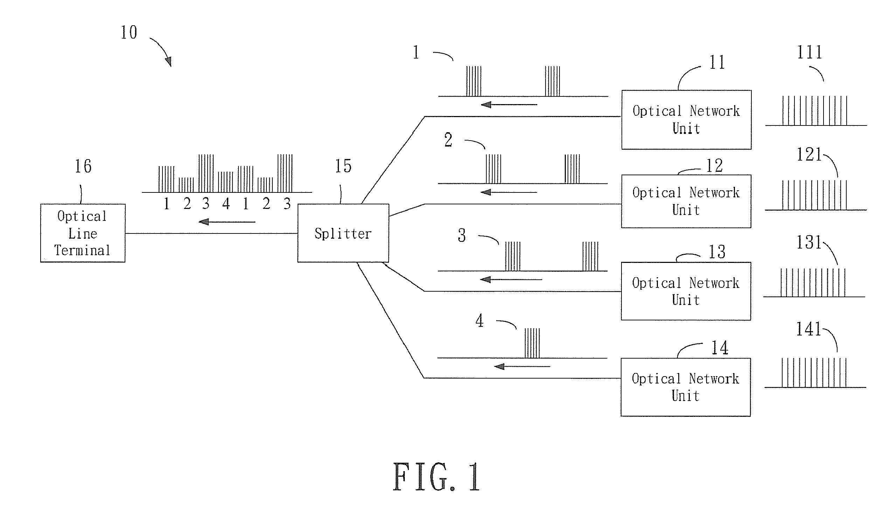

FIG. 1 is a diagram illustrating a usual passive optical network (PON) system. In the passive optical network system 10, plural optical network units 11-14 are disposed at the corresponding offices or houses, and connected to the optical line terminal (OLT) 16 via the splitter 15.

The optical network units 11-14 up-transmit the burst mode data to the optical line terminal 16 in a time division multiplexing (TDM) manner. During data up-transmission, each of optical network units 11-14 is only assigned to transmit data within one time slot 1, 2, 3 or 4. The optical network units 11-14 transmit data packets 111, 121, 131 and 141 at the allocated time slot 1, 2, 3 and 4, respectively.

In other words, the optical network units at the user ends are connected to an optical channel of the optical line terminal at the station end in a time division multiplexing manner. During data up-transmission, the receiver of the optical line terminal at the station end receives the optical signals transmitted from different user ends. In general, the problem diagnosis of the burst mode data transmitted from the user ends is performed at the station end by utilizing expensive apparatuses to diagnose the data transmitted from each user end, and it is impossible to respectively diagnose the data transmitted from the user ends at the user ends by the expensive apparatuses. When the data packet up-transmitted from the user end exceeds the time interval of the allocated time slot, the overall operation of the communication system is endangered.

### SUMMARY OF THE INVENTION

It is an object of the present invention to provide an optical network unit and its abnormal detecting method, wherein when the data packet up-transmitted by the optical network unit exceeds a time interval of an allocated time slot, the optical network unit turns off the optical transmitter, thereby preventing the abnormal signal transmitted into the optical fiber of the passive optical network system.

It is another object of the present invention to provide a power monitoring method of the optical network unit to obtain the average output power of the optical transmitter.

To achieve the above, the present invention provides an optical network unit in a passive optical network system. The optical network unit includes an optical transmitter, an optical detector and a signal measurement module. The optical transmitter transmits an optical signal to an optical line terminal of a passive optical network system. The optical detector is utilized for monitoring the emission of the optical signal and transforming the received optical signal into a current signal. Then, the current signal is transformed into a voltage signal. The signal measurement module is connected to the optical detector for filtering and sampling the voltage signal to generate a sampling signal. The average output power of the optical transmitter can be obtained by averaging the voltage values of the sampling signal.

The optical network unit further includes a controller connected to the signal measurement module. When the up-transmission data packet of the optical network unit exceeds the time interval of the allocated time slot, the voltage values of the sampling signal have several points over a threshold. Then, the optical transmitter is turned off.

To achieve the above, the present invention also provides an abnormal detecting method of an optical network unit. The abnormal detecting method of the optical network unit includes the following steps: providing an optical transmitter for up-transmitting an optical signal to an optical line terminal of a passive optical network system; providing an optical detector for monitoring the emission of the optical signal and generating a current signal; transforming the current signal into a voltage signal; filtering and sampling the voltage signal to generate a sampling signal; and turning off the optical transmitter when several sampling points of the sampling signal continuously exceeds a threshold.

To achieve the above, the present invention also discloses a power monitoring method of an optical network unit. The power monitoring method includes the following steps: providing an optical transmitter for up-transmitting an optical signal to an optical line terminal of a passive optical network system; providing an optical detector for monitoring the emission of the optical signal and generating a current signal; transforming the current signal into a voltage signal; filtering and sampling the voltage signal to generate a sampling signal; and averaging voltage values of the sampling signal to obtain the average output power of the optical transmitter.

To sum up, in the present invention, the optical detector of the optical network unit monitors the transmitted optical signal and generates the current signal. The current signal is transformed into the voltage signal. Then, the voltage signal is filtered and sampled to generate a sampling signal. The sampling is an asynchronous low speed sampling in cooperation with an asynchronous low speed clock. The voltage signal is continuously sampled not only in the allocated time slot but also in other time slots.

In the abnormal detecting method of the optical network unit, when the up-transmission data packet of the optical network unit exceeds the time interval of the allocated time slot, the voltage values of the sampling signal have several points over a threshold. Then, the optical transmitter is turned off.

In the power monitoring method of the optical network unit, after the current signal generated by the optical detector is transformed into the voltage signal, and the voltage signal is filtered and sampled to generate a sampling signal, the voltage values of the sampling signal over the lower limit are averaged to obtain an average output power of the optical signal transmitted by the optical network unit.

### BRIEF DESCRIPTION OF THE DRAWINGS

The present invention will become more fully understood from the subsequent detailed description and accompanying drawings, which are given by way of illustration only, and thus are not limitative of the present invention, and wherein:

FIG. 1 is a diagram illustrating a usual passive optical network system;

FIG. 2 is a block diagram illustrating the optical network unit according to the preferred embodiment of the present invention;

FIG. 3 is a diagram illustrating the burst mode data up-transmitted by the optical network unit of the present invention;

FIG. 4 is a diagram illustrating the smooth voltage signal of the optical network unit of the present invention;

FIG. 5 is a sampling diagram of the normal burst mode data of the present invention;

FIG.6 is a sampling diagram of the abnormal burst mode data of the present invention;

FIG. 7 is a flow chart illustrating the abnormal detecting method of the optical network unit of the present invention;

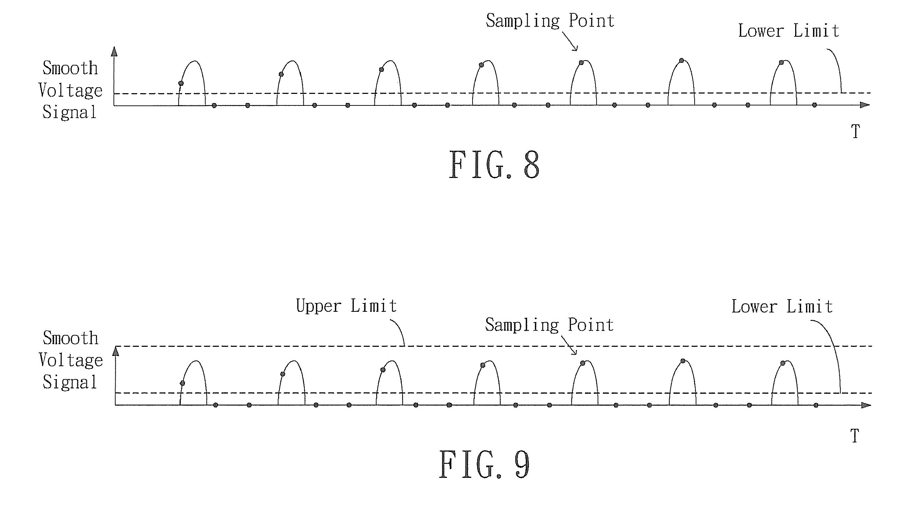

FIG. 8 is a diagram illustrating an average output power calculating method of the optical transmitter of the present invention; and

FIG. 9 is a diagram illustrating another average output power calculating method of the optical transmitter of the present invention.

### DETAILED DESCRIPTION OF THE INVENTION

The present invention will be apparent from the following detailed description, which proceeds with reference to the accompanying drawing.

A passive optical network system includes a plurality of optical network units. Each optical network unit is connected to a splitter via an optical fiber, and then connected to an optical line terminal. The optical network unit up-transmits the burst mode data to the optical line terminal in a time division multiplexing (TDM) manner. During data up-transmission, each optical network unit is allocated one time slot, and only transmits data packet in the allocated time slot.

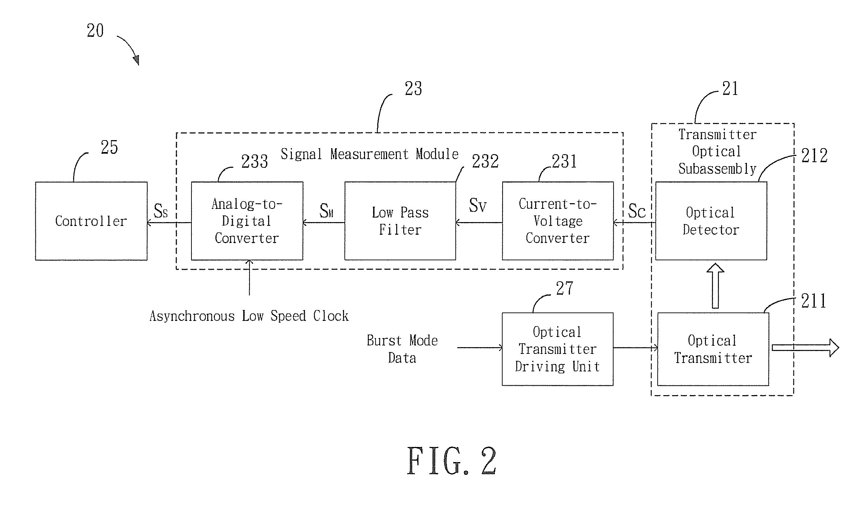

FIG. 2 is a block diagram illustrating the optical network unit according to the preferred embodiment of the present invention. The optical network unit 20 includes a transmission module 21 and a signal measurement module 23. The transmission module 21 includes an optical transmitter 211 and an optical detector 212. The transmission module 21 includes but not limited to a transmitter optical subassembly (TOSA) or a bi-directional optical subassembly (BOSA).

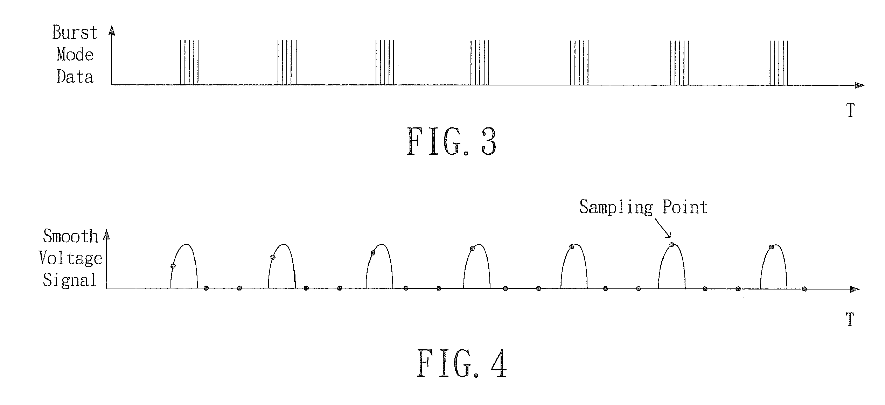

FIG. 3 is a diagram illustrating the burst mode data up-transmitted by the optical network unit of the present invention. The optical transmitter 211 transmits an optical signal to the optical line terminal (OLT) of the passive optical network system. During data up-transmission of the optical network unit 20, the optical transmitter 211 transmits an optical signal only in the allocated time slot. The optical signal includes burst mode data. During data up-transmission of the optical network unit 20, the optical transmitter 211 is turned on only in the allocated time slot, and turned off in other time slots. The optical transmitter 211 is preferably a laser diode. The optical detector 212 is utilized for monitoring the transmitted optical signal and generating a current signal S_{C}. The optical detector 212 is preferably a photo-diode. The signal measurement module 23 is connected to the optical detector 212 for transforming the current signal S_{C} to a voltage signal S_{V}, and filtering and sampling the voltage signal S_{V} to generate a sampling signal S_{S}.

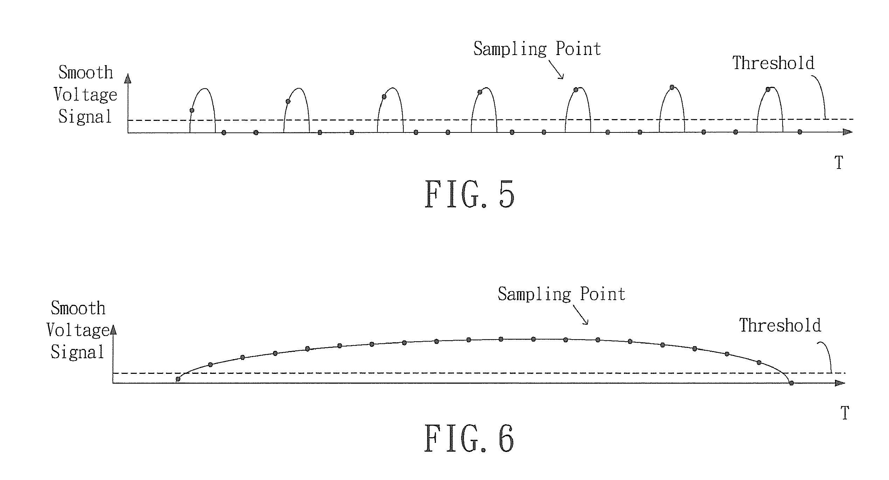

The signal measurement module 23 includes a current-to-voltage converter 231, a low pass filter 232 and an analog-to-digital converter 233. The current-to-voltage converter 231 is connected to the optical detector 212 for transforming the current signal S_{C} to the voltage signal S_{V}. The low pass filter 232 is connected to the current-to-voltage converter 231 for filtering the voltage signal S_{V} and generating a smooth voltage signal S_{M} as shown in FIG. 4. The analog-to-digital converter 233 is connected to the low pass filter 232 for sampling the smooth voltage signal S_{M} and generating a sampling signal S_{S}. The sampling method of the analog-to-digital converter 233 is an asynchronous low speed sampling in cooperation with an asynchronous low speed clock having a frequency higher than that of burst mode data transmission. The sampling is a continuous sampling in which the smooth voltage signal S_{M} are sampled not only in the allocated time slot but also in other time slots. In normal burst mode data up-transmission, only the voltage values of the sampling signal S_{S} in the allocated time slot exceed a threshold, and other voltage values of the sampling signal S_{S} sampled in other time slots are less than the threshold, as shown in FIG. 5.

The optical network unit 20 further includes a controller 25 connected to the analog-to-digital converter 233. In abnormal burst mode data, when data packet up-transmitted by the optical network unit 20 exceeds the time interval of the allocated time slot, the voltage values of several sampling points exceed the threshold continuously (as shown in FIG. 6). The controller 25 turns off the optical transmitter 211. Furthermore, the voltage values of the sampling signal S_{S} are averaged to obtain an average output power of the optical transmitter 211.

The optical network unit 20 further includes an optical transmitter driving unit 27 connected to the optical transmitter 211 for receiving a control signal of the burst mode data to drive the optical transmitter 211. The optical transmitter driving unit 27 is preferably a laser diode driver.

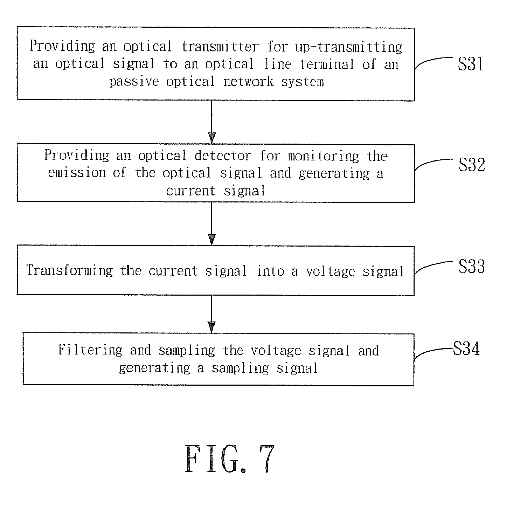

FIG. 7 is a flow chart illustrating the abnormal detecting method of the optical network unit of the present invention. The abnormal detecting method includes the following steps.

In step S31, the optical transmitter 211 is provided for up-transmitting the optical signal to the optical line terminal of the passive optical network system.

In step S32, the optical detector 212 is provided for monitoring the emission of the optical signal and generating the current signal S_{C}.

In step S33, the current signal S_{C} is transformed into a voltage signal S_{V}.

In step S34, the voltage signal S_{V} is filtered and sampled to generate the sampling signal S_{S}.

The current signal S_{C} is transformed into the voltage signal S_{V} by a current-to-voltage converter 231. In the filtering step, the voltage signal S_{V} is filtered by a low pass filter 232 to generate a smooth voltage signal S_{M}. In the sampling step, the smooth voltage signal S_{M} is sampled by an analog-to-digital converter 233 to generate the sampling signal S_{S}.

When the voltage values of several sampling points of the sampling signal S_{S} continuously exceed the threshold, the optical transmitter 211 is turned off.

The power monitoring method of the optical network unit 20 also includes the steps S31 to S34. The sampling signal S_{S} is also sampled by the above-mentioned method. The same description is omitted.

The power-monitoring method further includes the following step. The voltage values of the sampling signal S_{S} are averaged to obtain the average output power of the optical transmitter 211.

In the averaging step, only the voltage values of sampling points sampled in the allocated time slot are averaged. Furthermore, only the voltage values of the sampling signal S_{S} over a lower limit are averaged. Alternatively, only the voltage values of the sampling signal S_{S} between a lower limit and a higher limit are averaged.

To sum up, in the present invention, the optical detector of the optical network unit monitors the transmitted optical signal and generates the current signal. The current signal is transformed into the voltage signal. Then, the voltage signal is filtered and sampled to generate a sampling signal S_{S}. The sampling is an asynchronous low speed sampling in cooperation with an asynchronous low speed clock. The sampling signal S_{S} is continuously sampled not only in the allocated time slot but also in other time slots.

In the abnormal detecting method of the optical network unit, when the up-transmission data packet of the optical network unit exceeds the time interval of the allocated time slot, the voltage values of the sampling signal have several points over a threshold continuously. Then, the optical transmitter is turned off.
In the power monitoring method of the optical network unit, the current signal generated by the optical detector is transformed into the voltage signal. Then, the voltage signal is filtered and sampled to generate a sampling signal. The voltage values of the sampling signal over the lower limit are averaged to obtain an average output power of the optical signal transmitted by the optical network unit. In summary there is disclosed an optical network unit including an optical transmitter, an optical detector and a signal measurement module. The optical transmitter transmits an optical signal to an optical line terminal of a passive optical network system. The optical detector is utilized for monitoring the emission of the optical signal and transforming the received optical signal into a current signal. Then, the current signal is transformed into a voltage signal. The signal measurement module is connected to the optical detector for filtering and sampling the voltage signal and generating a sampling signal. The average output power of the optical transmitter can be obtained by averaging the voltage values of the sampling signal. Once the up-transmission data packet of the optical network unit exceeds the time interval of the allocated time slot, and the voltage values of the sampling signal have several points over a threshold, the optical transmitter is turned off. Furthermore, an abnormal detecting & power monitoring method of the optical network unit is also disclosed herein.

Although the present invention has been described with reference to specific embodiment, this description is not meant to be construed in a limiting sense. Various modifications of the disclosed embodiment, as well as alternative embodiments, will be apparent to persons skilled in the art. It is, therefore, contemplated that the appended claims will cover all modifications that fall within the true scope of the present invention.

## Claims

1. An optical network unit (20) comprising:
a transmission module (21) comprising:
an optical transmitter (211) for transmitting an optical signal to an optical line terminal (OLT) of a passive optical network system; and
an optical detector (212) for monitoring the transmitted optical signal and generating a current signal; and
a signal measurement module (23) connected to the optical detector for transforming the current signal to a voltage signal, and filtering and sampling the voltage signal to generate a sampling signal.

2. The optical network unit according to claim 1, wherein the passive optical network system comprises a plurality of the optical network units and each of the optical network units is connected to a splitter via an optical fiber, and then connected to the optical line terminal.

3. The optical network unit according to claim 1 or 2, wherein the optical network unit up-transmit data to the optical line terminal in a time division multiplexing manner, and during data up-transmission, each of the optical network units is assigned to transmit data packet in one time slot.

4. The optical network unit according to one of the preceding claims, wherein the optical transmitter is a laser diode and the optical detector is a photo-diode.

5. The optical network unit according to one of the preceding claims, wherein the optical signal comprises burst mode data, and during data up-transmission of the optical network unit, the optical transmitter is turned on only in an allocated time slot, and turned off in other time slots.

6. The optical network unit according to one of the preceding claims, wherein the signal measurement module comprises:
a current-to-voltage converter (231) connected to the optical detector for transforming the current signal to the voltage signal;
a low pass filter (232) connected to the current-to-voltage converter for filtering the voltage signal and generating a smooth voltage signal; and
an analog-to-digital converter (233) connected to the low pass filter for sampling the smooth voltage signal and generating a sampling signal.

7. The optical network unit according to claim 6, wherein the sampling method of the analog-to-digital converter is an asynchronous low speed sampling in cooperation with an asynchronous low speed clock having a frequency higher than that of burst mode data transmission, and is a continuous sampling in which the analog-to-digital converter not only samples the smooth voltage signal in an allocated time slot but also other time slots.

8. The optical network unit according to claim 7, further comprising a controller (25) connected to the analog-to-digital converter, wherein when data packet up-transmitted by the optical network unit exceeds a time interval of the allocated time slot and the voltage values of several sampling points continuously exceed a threshold, the controller turns off the optical transmitter.

9. The optical network unit according to claim 8, wherein the controller averages the voltage values of the sampling signal to obtain an average output power.

10. The optical network unit according to claim 9, further comprising an optical transmitter driving unit connected to the optical transmitter for receiving a control signal of a burst mode data to drive the optical transmitter, wherein the optical transmitter driving unit is a laser diode driver.

11. An abnormal detecting method of an optical network unit, comprising steps of:
providing an optical transmitter for up-transmitting an optical signal to an optical line terminal of a passive optical network system (S31);
providing an optical detector for monitoring the emission of the optical signal and generating a current signal (S32);
transforming the current signal into a voltage signal (S33);
filtering and sampling the voltage signal to generate a sampling signal (S34); and
turning off the optical transmitter when several voltage values of the sampling signal continuously exceed a threshold.

12. The abnormal detecting method of the optical network unit according to claim 11, wherein the optical signal comprises burst mode data, and the optical transmitter of the optical network unit turns on only in an allocated time slot and turns off in other time slots;
and/or wherein:
the current signal is transformed into the voltage signal by a current-to-voltage converter;
the voltage signal is filtered by a low pass filter to generate a smooth voltage signal in the step of filtering the voltage signal; and
the smooth voltage signal is sampled by an analog-to-digital converter to generate the sampling signal in the step of sampling the voltage signal;
and/or wherein:
the sampling of the voltage signal is an asynchronous low speed sampling in cooperation with an asynchronous low speed clock having a frequency higher than that of burst mode data transmission, and is a continuous sampling in which the smooth voltage signal is sampled not only in an allocated time slot but also in other time slots;
and/or wherein:
when data packet transmitted by the optical network unit exceeds a time interval of an allocated time slot, the optical transmitter is turned off.

13. A power monitoring method of an optical network unit, comprising steps of:
providing an optical transmitter for up-transmitting an optical signal to an optical line terminal of a passive optical network system (S31);
providing an optical detector for monitoring the emission of the optical signal and generating a current signal (S32);
transforming the current signal into a voltage signal (S33);
filtering and sampling the voltage signal to generate a sampling signal (S34); and
averaging voltage values of the sampling signal to obtain an average output power of the optical transmitter.

14. The power monitoring method of the optical network unit according to claim 13, wherein the optical signal comprises burst mode data, and the optical transmitter of the optical network unit is turned on in an allocated time slot, and turned off in other time slots;
and/or wherein:
the current signal is transformed into the voltage signal by a current-to-voltage converter;
the voltage signal is filtered by a low pass filter to generate a smooth voltage signal in the step of filtering the voltage signal; and
the smooth voltage signal is sampled by an analog-to-digital converter to generate the sampling signal in the step of sampling the voltage signal.

15. The power monitoring method of the optical network unit according to claim 14, wherein the sampling of the voltage signal is an asynchronous low speed sampling in cooperation with an asynchronous low speed clock having a frequency higher than that of burst mode data transmission, and is a continuous sampling in which the smooth voltage signal is sampled not only in an allocated time slot but also other time slots.

16. The power monitoring method of the optical network unit according to claim 15, wherein only voltage values of sampling points in the allocated time slot are averaged in the step of sampling the voltage signal.

17. The power monitoring method of the optical network unit according to claim 16, wherein only the voltage values of the sampling signal over a lower limit are averaged, or only the voltage values of the sampling signal between a lower limit and a higher limit are averaged in the step of averaging voltage values of the sampling signal.
